# EUROPÄISCHE PATENTANMELDUNG

(11) **EP 1 780 180 A1**
(43) Veröffentlichungstag der Anmeldung: **02.05.2007**
(21) Anmeldenummer: 06014093.6
(22) Anmeldetag: 07.07.2006
(51) Int. Cl.: C03B 5/187, C03B 5/173, C03B 5/182

(54) **Verfahren und Vorrichtung zum Konditionieren und Homogenisieren von Glasschmelzen**

(30) Priorität: 24.10.2005 DE 102005050871
(71) Anmelder: Beteiligungen Sorg GmbH & Co. KG, D-97816 Lohr (DE)
(72) Erfinder: Lindig, Matthias, D-55218 Ingelheim (DE); Gesslein, Joachim, D-97845 Neustadt-Erlach (DE)
(74) Vertreter: Zapfe, Hans

(57) **Zusammenfassung**

Die Erfindung betrifft ein Verfahren und eine Vorrichtung zum Konditionieren und Homogenisieren von in Fliesskanälen (1) mit einer vertikalen Mittenlängsebene (E-E) und mit Seitenwänden (3, 4) fliessenden Glasschmelzen unter der Einwirkung von in Fliessrichtung alternierenden Querschnittsänderungen und in Fliessrichtung angeordneten Rührern (5) mit vertikalen Rührerwellen (6). Zur Lösung der Aufgabe, einerseits eine effektive Homogenisierung des Hauptglasstroms im Fliesskanal zu erreichen, und andererseits eine hohe Flexibiltät der gesamten Anlage zu erzielen, wird erfindungsgemäss vorgeschlagen, dass
a) die Glasschmelze durch mindestens einen Fliesskanal (1) geleitet wird, in dem die Querschnittsänderungen auf beiden Seiten durch mehrere in Fliessrichtung aufeinander folgende Vorsprünge (7, 8) herbeigeführt werden, die auf die Mittenlängsebene (E-E) ausgerichtet sind und die auf ihren Einströmseiten (7a, 8a) und auf ihren Abströmseiten (7b, 8b) Wandbereiche besitzen, die derart schräg zur Mittenlängsachse (E-E) verlaufen, dass in dem Fliesskanal (1) keine recht- oder spitzwinkligen Ecken gebildet werden, und dass
b) die Rührer (5) zwischen in Fliessrichtung aufeinander folgenden Abströmseiten (7b, 8b) und Einströmseiten (7a, 8a) der Vorsrünge (7, 8) angeordnet werden bzw. sind.

## Beschreibung

### Die Ausgangsbasis:

Die Erfindung betrifft ein Verfahren zum Konditionieren und Homogenisieren von in Fliesskanälen mit einer vertikalen Mittenlängsebene und mit Seitenwänden fliessenden Glasschmelzen unter der Einwirkung von in Fliessrichtung alternierenden Querschnittsänderungen und in Fliessrichtung angeordneten Rührern mit vertikalen Rührerwellen.

### Die Problemstellung beim Homogenisieren von Glas:

Durch die Zugabe von die Transmission beeinflussenden Konzentraten, welche bevorzugt in ein weisses bzw. helles Grundglas in einem Glas führenden Vorherd oder Fliesskanal zugegeben werden, wird ein Glas mit bestimmten Transmissionseigenschaften hergestellt. Nach der Zugabe der Konzentrate, welche Träger von die Transmission beeinflussenden Bestandteilen sind, wie z.B. polyvalenter Ionen, müssen diese zunächst eingeschmolzen werden. Dabei entstehen Konzentrations- und Dichteunterschiede in der Glassmasse. Diese müssen so weit ausgeglichen werden, dass im Endprodukt keinerlei Konzentrations- bzw. Transmissionsunterschiede mehr feststellbar sind. Dabei spielt die Diffusion eine massgebliche Rolle, welche durch Konvektionsströmungen im Glasbad unterstützt wird.

Da allerdings für diese Vorgänge einerseits sehr hohe Verweilzeiten erforderlich sind und andererseits nicht die gesamte Glasmasse an diesem Vorgang gleichermassen teilnehmen kann, wird versucht, diese Vorgänge durch eine intensive Zwangsdurchmischung zu beschleunigen. Dabei soll in der Weise durchmischt werden, dass immer wieder Glas mit höherer und niedrigerer Konzentration der die Transmission beeinflussenden Bestandteile zusammengeführt wird und möglichst alle Bereiche des Glasbades an der Durchmischung teilnehmen. Diese überlegungen gelten auch für andere als Färbeprozesse. Beim eigentlichen Mischprozess wird die Glassmasse dann zu möglichst langgezogenen Volumenbestandteilen mit grossen Reaktionsflächen auseinander gezogen, um so wiederum die natürlichen Diffusionsvorgänge zu begünstigen. Zu diesem Zweck wird in der Regel ein oder werden auch mehrere Rührer verwendet, durch welche(n) eine optimale Vermischung des Glases bewirkt werden soll.

Die Erfindung befasst sich mit der Anordnung der Rührer in Verbindung mit der Gestaltung des Fliesskanals.

### Der Stand der Technik:

Bekannt ist die Anordnung mehrerer Spiralrührerbänke in einem Fliesskanal bzw. einem Vorherd, z.B. durch die US 3 328 150 und die US 3 723 084. Die Anzahl der Rührer auf einer Bank, die Anzahl der Bänke, die Rührertypen und Drehrichtungen können dabei voneinander verschieden sein und richten sich nach der zu produzierenden Tonnage und der Kanalgeometrie.

Durch die US 3 328 150 ist eine Vorrichtung zum Mischen von Glasschmelzen bekannt, bei der in einem Fliesskanal durch zwei quaderförmige Bodenschwellen und einen von oben in die Schmelze ragenden Skimmerblock einerseits oder durch alternierend von den Seiten in die Schmelze ragende quaderförmige Leitwände andererseits stark mäandrierende Glasströmungen erzeugt werden. Zwischen diesen Bodenschwellen oder Leitwänden befinden sich Paare von Rührern, die quer zur Längsrichtung des Fliesskanals ausgerichtet sind. Dadurch entstehen vor und hinter den Bodenschwellen oder Leitwänden rechtwinklige Toträume, deren Inhalt sich der Rührwirkung zumindest weitgehend entzieht. Dies führt jedoch bei Glaswechseln durch Selbstreinigung zu langen Spülzeiten und grossen Glasverlusten.

Durch die US 3 723 084 ist es zum Mischen von Glasschmelzen bekannt, in einem Fliesskanal durch zwei quaderförmige Bodenschwellen und einen von oben in die Schmelze ragenden Skimmerblock eine vertikale, stark mäandrierende Glasströmung zu erzeugen. Zwischen diesen Bodenschwellen befinden sich Rührer, die in Längsrichtung des Fliesskanals ausgerichtet sind. Dadurch entstehen sowohl vor als auch hinter den Bodenschwellen rechtwinklige Toträume, deren Inhalt sich der Rührwirkung zumindest weitgehend entzieht. Dies führt jedoch gleichfalls bei Glaswechseln durch Selbstreinigung zu langen Spülzeiten und grossen Glasverlusten.

Die Vorteile dieser Konzepte bestehen in einer relativ einfachen Bauweise. Die Nachteile dieser Konzepte liegen in der begrenzten Mischkapazität. So wird die spezifische Belastung der Färbekanäle dadurch begrenzt, dass zunehmend das Grundglas an den Wandungen des Kanals zur Auslass-öffnung strömt, ohne von den Rührern beeinflusst zu werden.

Die bekannten Lösungen sollen eine durchgehende Strömung des Grundglases verhindern. Dazu dient z.B. die stark mäanderförmige Strömung in dem mit Rührern bestückten Kanal. Die stark mäanderförmige Strömung wird durch die beschriebenen Einbauten erzwungen. Es wird weiter vorgeschlagen, die Strömung des Glases aus der Waagrechten in die Senkrechte umzulenken, um auf diese Weise die Rührwirkung zu erhöhen. Diese Technik wird vorzugsweise bei kleineren Mengenströmen im Spezialglasbereich zur Homogenisierung verwendet.

Die Umlenkung des Glasstromes in der Vertikalen hat einerseits den Vorzug hinsichtlich der Homogenisierungswirkung. Sie hat andererseits aber auch den Nachteil, dass man auf einen durchgehenden Kanalboden verzichtet. Bei einem Wechsel auf einen neuen Zusatz von Farbkomponenten hat dies zur Folge, dass das bis dahin mit dem alten Farbzusatz gefärbte Glas aus dem Kanal entfernt werden muss. Dies geschieht auf natürliche Weise als Selbstreinigung durch die Durchströmung des Kanals. Vor und hinter den Einbauten, vorzugsweise vor und hinter denen, welche sich am Boden des Kanals zur Umlenkung in die Vertikale befinden, wird der Kanal weniger intensiv durchströmt. Dies hat wiederum zur Folge, dass mit längeren Spülzeiten und hohen Farbstoff- und Glasverlusten in derartigen Anlagen gerechnet werden muss.

### Die geschilderten Probleme werden auch bei dem nachstehend genannten Stand der Technik nicht zufriedenstellend gelöst:

Durch die US 3 352 659 ist es bekannt, zum Durchmischen einer Glasschmelze innerhalb eines Fliesskanals und zwischen zwei Kanalabschnitten einen einzigen senkrechten und teilweise zylindrischen Durchgang anzuordnen, in dem übereinander auf einer senkrechten Welle mindestens zwei Rührelemente angeordnet sind und durch den die Glasschmelze auf einem Z-förmigen Wege gefördert wird. Zur Konzentration des Glasstroms sind die beiden senkrechten Kanalwände mit keilförmigen Vorsprüngen versehen, zwischen deren senkrechten Kanten die Rührelemente angeordnet sind. Die Mischwirkung ist jedoch trotz des komplizierten Etagenaufbaus begrenzt und auf den Bereich des einzigen Durchgangs beschränkt.

Durch die DE 1 471 832 A1 ist es zum Homogenisieren und Einfärben von Glasschmelzen bekannt, in einem Fliesskanal mit ebenen parallelen Wänden in Queranordnung mindestens eine Reihe von Rührern anzuordnen, mit denen im oberen Bereich der Schmelze aufsteigende Strömungen erzielt werden sollen. Dabei soll aber der Bodenbereich von der Rührwirkung unbeeinflusst bleiben, damit Rückströmungen der Schmelze möglich sind. Diese Trennung wird dadurch erzwungen, dass unter den Rührern und mit Abstand oberhalb des ebenen Kanalbodens stationäre Kreisscheiben angeordnet sind. Diese Schrift setzt sich kontrovers mit dem Problem auseinander, dass bei bekannten Rührsystemen für Farbmischungen keine Rückströmungen in Kauf genommen werden sollen (Spalte 2, Zeilen 43 bis 48).

Durch die US 3 463 627 ist es bekannt, zum Untermischen von Farbstoffen in eine Glasschmelze in einem Fliesskanal mit einem ebenen Kanalboden und ebenen Kanalwänden in alternierender Anordnung ebene, in Fliessrichtung schräg stehende, von den Seitenwänden getrennte Umlenkplatten und dazwischen senkrechte Rührer anzuordnen. Die Umlenkplatten und/oder die Rührer sind die eigentlichen Farbstoffträger und verbrauchen sich dadurch allmählich. Dabei wird der Glasschmelze ein sehr stark mäanderförmiger Strömungsweg mit schrittweiser Zugabe der Farbstoffe aufgezwungen, in dem die zuletzt einfliessenden Farbstoffe am wenigsten gerührt werden. Ferner sind die Rührerplatten von grossen Freiräumen mit sogenannten "toten Ecken" umgeben, in denen sich grössere Glasmengen befinden, wodurch bei einem Farbwechsel lange Reinigungszeiten und hohe Glasverluste entstehen. Vor allem muss vor einem Farbwechsel die gesamte Anordnung zerlegt und müssen die funktionswesentlichen Teile ausgetauscht werden.

Durch die DE 25 52 116 A1 und die DE 26 47 673 A1 ist es bekannt, zum Untermischen von Farbstoffen bzw. Homogenisieren der Glasschmelze in einem Fliesskanal zwei Rührer in senkrechten Rührerschächten anzuordnen, die ihrerseits in Quer-Barrieren des Fliesskanals angeordnet sind und in Strömungsrichtung senkrechte Wandflächen aufweisen. Im ersten Rührerschacht wird die Schmelze von oben nach unten, und im zweiten Rührerschacht wird die Schmelze von unten nach oben gefördert. Dabei sind die beiden Rührerschächte im Bodenbereich miteinander verbunden. Wegen der toten Ecken wird ein grosser Teile des Volumens der Schmelze von der Rührwirkung nicht erfasst, so dass bei einem Farbstoff- oder Glaswechsel lange Reinigungszeiten und grosse Glasverluste entstehen.

Durch die DE 31 19 816 A1 ist ein Hochleistungsspeiser zur Konditionierung einer Glasströmung bekannt, bei dem in einem Fliesskanal zwischen zwei Kühlzonen einerseits und einer Ausgleichszone und einer Kopf- und Entnahmezone andererseits eine Rührerzone mit einem einzigen senkrechten Rührer angeordnet ist. Dieser Rührer befindet sich in einem senkrechten Schacht über einer stufenförmigen Absenkung des Bodens des Fliesskanals. In diesem Schacht strömt die Glasschmelze abwärts, wird aber durch die Drehrichtung und Gestaltung des Rührers verzögert.

In den beiden Kühlzonen befinden sich zur Verlängerung des Strömungsweges auf einem stark mäanderförmigen Weg alternierend gegenüber liegende plattenförmige Schikanen, die auf ihren beiden Seiten tote Ecken bilden, in denen Heizelektroden angeordnet sind. Auch diese toten Ecken führen bei einem Glaswechsel zu langen Reinigungszeiten und hohen Glasverlusten. Die Ausgleichszone hat die Form eines Rohres und einen konstanten Querschnitt. Die Erhaltung der Homogenität der Glasschmelze in der Ausgleichszone erfordert einen hohen Konstruktions- und Regelungsaufwand für die Beheizung. Auch die darin befindliche Glasschmelze führt bei einem Glaswechsel zu langen Reinigungszeiten und hohen Glasverlusten.

Die DE 102 53 222 A1 befasst sich mit dem Problem der Läuterung von Glasschmelzen durch Erzwingen häufiger Richtungsänderungen des Glasstroms und häufiger Querschnittseinengungen durch Verwendung besonderer Einbauteile in den Kanal und Senkung der Oberflächenspannung der Schmelze. Soweit hierfür eine Rührzelle angegeben ist, soll dort auch ein Beitrag zur Durchmischung und Homogenisierung der Schmelze geleistet werden. Die Rührzelle besteht aus einem Rührer in einem senkrechten Tank, dem Schmelze auf halber Höhe von der Seite her zugeführt und aus dem die Schmelze durch den Boden abgeführt wird. Die Spaltbreite zwischen Rührer und Kanalwand soll unter 20 mm betragen und die Rührerdrehzahl grösser als 10-20 U/min sein. Als Strömungshindernisse sind bis zu 20 Prallbleche angegeben. Die Ausführungsbeispiele zeigen ebene, abgewinkelte und konische Prallbleche mit zahlreichen öffnungen relativ kleinen Querschnitts. Eine unmittelbare Wechselwirkung zwischen den Prallblechen und dem Rührer ist jedoch nicht offenbart.

Durch die US 5,862,169 A ist es bekannt, ein Arbeitsende und eine Floatglaskammer durch einen rechtwinklig abgebogenen Kanal zur thermischen Konditionierung und Homogenisierung zu verbinden und an der Knickstelle dieses Kanals zur Bildung eines Schwanenhalses eine einzige Verengung von zwei Metern auf einen Meter durch zwei gegenüber liegende und gekrümmte Wandelemente vorzusehen, die tote Ecken vermeiden sollen.

Einerseits ist offenbart, dass in diesem Kanal auch Rührer vorgesehen sein können, andererseits jedoch nicht, dass dies in unmittelbarer Nähe der Knickstelle und der Vorsprünge zu erfolgen hat. Der Schwanenhals dient also nicht zur Einengung der Strömung im unmittelbaren Bereich jeweils eines einzelnen Rührers.

Durch die WO 2004/070251 A1 ist es zum Zwecke der Austreibung von Gasblasen durch Vakuumentgasung von Glasschmelzen bekannt, diese durch metallische Rohrleitungen mit rotationssymmetrischen oder ovalen Querschnitten zu fördern, die eingeschweisste, elastisch verformbare, umlaufende und wellenförmige Ein- und/oder Ausbuchtungen enthalten, um die Rohrlänge periodisch im Sinne von Vibrationen verändern zu können. In der entsprechenden aber nicht vorveröffentlichten US 2005/0268663 A1 ist unter [0074] angegeben, dass die konvexen Abschnitte 20 in axialer Richtung zusammengeschoben oder gestreckt werden können, um thermische Ausdehnungen oder Schrumpfungen der Leitung 10 ausgleichen zu können, ohne dass sich die Gesamtlänge verändert. Das ist bei keramischen Werkstoffen ausgeschlossen. Soweit Wandstärken angegeben sind, sollen diese zwischen 0,1 und 1,5 mm liegen. Soweit Rührer angegeben sind, liegen diese in getrennten Kammern und mit Abständen zwischen solchen Ein- und/oder Ausbuchtungen (Figur 8) und stehen daher nicht in Wechselwirkungen damit. Die Figur 12 zeigt den analogen Stand der Technik hierzu und besitzt keine solchen Ein- und/oder Ausbuchtungen. Es handelt sich auch nicht um eine Fortbildung eines herkömmlichen Vorherdes oder Speisers mit einer inneren keramischen Auskleidung, die sich den aufgezwungenen Längenänderungen einer metallischen Umhüllung widersetzen würde.

Durch die JP61006133 ist es bekannt, zur Beimischung von Bleiverbindungen für die Herstellung von Tafel- oder Kristallglas in einem mehrfach untergliederten Vorherd oder Speiserkanal, fünf Gruppen von Rührern anzuordnen, wobei die Achsen jeder Gruppe in Ebenen liegen, die quer zur Längsachse des spiegelsymmetrischen Speiserkanals verlaufen. Die zweiten bis vierten Rührergruppen bestehen aus jeweils fünf Rührern, also insgesamt fünfzehn Rührern, und die fünfte Rührergruppe besteht aus fünf Rührern. Zur Unterbringung der zweiten bis vierten Rührergruppen und der fünften Rührgruppe ist der Speiserkanal erweitert und mit spiegelsymmetrischen Ausbuchtungen, aber keinen Verengungen, versehen, die in der Draufsicht jeweils einen trapezförmigen Querschnitt mit schräg stehenden Wandelementen besitzen. Dadurch wird zwar die Ausbildung von Toträumen für die Strömung unterdrückt, allein, die jeweils weiter innen liegenden Rührer stehen nicht in einer Wechselwirkung mit den schräg stehenden Wandelementen. Die besagten Ausbuchtungen dienen jeweils nur der Unterbringung einer solchen Vielzahl von Rührern. Diese Ausbuchtungen haben eine erhebliche Volumenvergrösserungen zur Folge, was der Erfindungsaufgabe widerspricht, einen Wechsel der Glassorte zeitlich zu verkürzen und auch mengemässig zu verringern. Es geht vielmehr um die Verkleidung mit resistenten Platinblechen

### Die Aufgabenstellung:

Der Erfindung liegen daher das Problem und die Aufgabe zugrunde, einerseits eine effektive Homogenisierung des Hauptglasstroms im Fliesskanal zu erreichen, und andererseits eine hohe Flexibilität der gesamten Anlage zu erzielen. Dabei soll ein Wechsel von einer auf die nächste Glassorte mit einer möglichst geringen Spülzeit und möglichst geringen Glasverlusten erzielt werden. Speziell bei Färbeverfahren sollen geringere Zugaben an färbenden Komponenten und bei einem Wechsel von einer auf die nächste färbende Komponente möglichst geringe Spülzeiten und möglichst geringe Farbstoff- und Glasverluste erzielt werden.

### Die Lösung der Aufgabe durch das Verfahren:

Die Lösung der Aufgabe erfolgt bei dem eingangs angegebenen Verfahren erfindungsgemäss dadurch, dass
a) die Glasschmelze durch mindestens einen Fliesskanal geleitet wird, in dem die Querschnittsänderungen auf beiden Seiten durch mehrere in Fliessrichtung aufeinander folgende Vorsprünge herbeigeführt werden, die auf die Mittenlängsebene ausgerichtet sind und auf ihren Einströmseiten und ihren Abströmseiten Wandbereiche besitzen, die derart schräg zur Mittenlängsebene verlaufen, dass in dem Fliesskanal keine recht- oder spitzwinkligen Ecken gebildet werden, und dass
b) die Rührer zwischen in Fliessrichtung aufeinanderfolgenden Abströmseiten und Einströmseiten angeordnet werden.

### Die Vorteile:

Durch die Erfindung wird einerseits eine effektive Homogenisierung des Hauptglasstroms im Kanal erreicht und andererseits eine hohe Flexibilität der gesamten Anlage erzielt. Dabei wird ein Wechsel von einer auf die nächste Glassorte mit einer geringeren Spülzeit und geringeren Glasverlusten erzielt. Speziell bei Färbeverfahren werden geringere Zugaben an färbenden Komponenten und bei einem Wechsel von einer auf die nächste färbende Komponente geringere Spül- und Stillstandszeiten und geringere Glasverluste erzielt.

Es ist im Zuge weiterer Ausgestaltungen des Verfahrens besonders vorteilhaft, wenn - entweder einzeln oder in Kombination - :
* die Rührer in der Mittenlängsebene in einer Reihenanordnung angeordnet sind, wenn die Glasschmelze zwischen Paaren von Vorsprüngen hindurchgeführt wird, die in spiegelsymmetrischer Anordnung auf die Mittenlängsebene ausgerichtet sind und wenn die Rührer - in Fliessrichtung gesehen - zwischen den Abströmseiten eines Paares von Vorsprüngen und den Einströmseiten des folgenden Paares von Vorsprüngen rotiert werden,
* die Rührer beiderseits der Mittenlängsebene um einen Querabstand versetzt alternierend angeordnet sind, wenn die Glasschmelze zwischen jeweils einer Seitenwand und dem jeweils gegenüber liegenden Vorsprung hindurchgeführt wird und wenn die Rührer in den Zwischenräumen zwischen den Seitenwänden und den Vorsprüngen rotiert werden,
* durch die Rührer vom Kanalboden ausgehende Aufwärtsströmungen erzeugt werden,
* die Seitenbereiche des Fliesskanals durch mindestens zwei Energiequellen aus der Gruppe Gasbrenner und Elektroden beheizt werden,
* die Gasbrenner mit mindestens einem Oxidationsgas aus der Gruppe Luft, mit Sauerstoff angereicherter Luft und Sauerstoff versorgt werden, und/oder wenn
* der Glasstand im Bereich der Rührer zwischen 140 und 230 mm gewählt wird.

### Die Lösung der Aufgabe durch die Vorrichtung:

Die Erfindung betrifft auch eine Vorrichtung zum Konditionieren und Homogenisieren von Glasschmelzen mit mindestens einem Fliesskanal mit einer vertikalen Mittenlängsebene und mit Seitenwänden, zwischen denen, in Fliessrichtung gesehen, alternierende Querschnittsänderungen und in Fliessrichtung angeordnete Rührer mit vertikalen Rührerwellen angeordnet sind.

Zur Lösung der gleichen Aufgabe und Erzielung der gleichen Vorteile wird erfindungsgemäss vorgeschlagen, dass
a) die Querschnittsänderungen im Fliesskanal auf beiden Seiten durch mehrere in Fliessrichtung aufeinander folgende Vorsprünge gebildet sind, die auf die Mittenlängsebene ausgerichtet sind und auf ihren Einströmseiten und ihren Abströmseiten Wandbereiche besitzen, die derart schräg zur Mittenlängsachse verlaufen, dass in dem Fliesskanal keine recht- oder spitzwinkligen Ecken vorhanden sind, und dass
b) die Rührer zwischen in Fliessrichtung aufeinander folgenden Abströmseiten und Einströmseiten der Vorsprünge angeordnet sind.

Es ist im Zuge weiterer Ausgestaltungen der Vorrichtung besonders vorteilhaft, wenn - entweder einzeln oder in Kombination - :
* die Rührer in der Mittenlängsebene in einer Reihenanordnung angeordnet sind, wenn die Vorsprünge paarweise in spiegelsymmetrischer Anordnung auf die Mittenlängsebene ausgerichtet sind und wenn die Rührer - in Fliessrichtung gesehen - zwischen den Abströmseiten eines Paares von Vorsprüngen und den Einströmseiten des folgenden Paares von Vorsprüngen angeordnet sind,
* die Rührer beiderseits der Mittenlängsebene alternierend um einen Querabstand versetzt angeordnet sind, wenn die Vorsprünge in Fliessrichtung alternierend versetzt auf die Mittenlängsebene ausgerichtet sind und wenn die Rührer zwischen den Seitenwänden einerseits und den Vorsprüngen andererseits angeordnet sind,
* die Rührer in Fliessrichtung in einem Längsabstand angeordnet sind, der mindestens das Zweifache des Querabstandes beträgt,
* dem in Fliessrichtung gesehen ersten Rührer mindestens ein weiterer Vorsprung vorgeschaltet ist,
* dem in Fliessrichtung gesehen letzten Rührer mindestens ein weiterer Vorsprung nachgeschaltet ist,
* der freie Strömungsquerschnitt zwischen den gegenüberliegenden Vorsprüngen im Verhältnis zum Abstand zwischen den Seitenwänden zwischen 0,5 und 0,9 gewählt ist,
* die spiegelsymmetrischen Vorsprünge im Bereich des engsten Strömungsquerschnitts eben ausgebildet sind und bei einem Abstand zwischen den Seitenwänden von 0,4 bis 1,0 m Längen zwischen 0,3 und 1,0 m aufweisen,
* die Vorsprünge zur kontinuierlichen Verengung und Erweiterung des Fliesskanals in der Draufsicht trapezförmig ausgebildet sind, wobei die Basisflächen der Vorsprünge in den inneren Ebenen der Seitenwände liegen,
* sich die Basisflächen der Vorsprünge in Bezug auf die gegenüber liegenden Seitenwände teilweise überlappen,
* die Vorsprünge zur kontinuierlichen Verengung und Erweiterung des Fliesskanals in der Draufsicht wellenförmig ausgebildet sind und winkelfrei in die Seitenwände übergehen,
* der Fliesskanal gebogen ausgebildet ist und wenn vor und hinter dem Biegungsbereich jeweils mindestens ein Rührer angeordnet ist,
* der Biegungsbereich mindestens einfach abgewinkelt ausgebildet ist,
* der Biegungsbereich kontinuierlich gekrümmt ausgebildet ist,
* der Reihenanordnung von Rührern und Vorsprüngen auf der Eintrittsseite eine Querreihe von Rührern vorgeschaltet ist,
* zwischen den in Fliessrichtung aufeinander folgenden Paaren von Vorsprüngen Taschen gebildet sind, die der Rührerbewegung und Rührerkontur angepasst sind und in die die Rührer hinein ragen, und/oder, wenn
* auf jeder Seite des Fliesskanals zwischen den in Fliessrichtung aufeinander folgenden Vorsprüngen Taschen gebildet sind, die der Rührerbewegung und Rührerkontur angepasst sind und in die die Rührer hinein ragen

Verfahren und Vorrichtung eignen sich in besonders vorteilhafter Weise zum Einmischen von Farbstoffen, zum Versorgen von Flachglaswannen und für die Verarbeitung hochwertiger Gläser.

### Die Ausführungsbeispiele:

Ausführungsbeispiele des Erfindungsgegenstandes und deren Wirkungsweisen und weitere Vorteile werden nachfolgend anhand der Figuren 1 bis 5 näher erläutert.

### Es zeigen:

- Figur 1: eine Draufsicht auf einen Ausschnitt aus einem geradlinigen Fliesskanal mit vier Rührern,
- Figur 2: einen vergrösserten Vertikalschnitt durch den Fliesskanal nach Figur 1 im Bereich eines Rührers,
- Figur 3: eine Draufsicht auf einen Ausschnitt aus einem abgewinkelten Fliesskanal mit acht Rührern,
- Figur 4: einen Ausschnitt aus Figur 1 in nochmals vergrössertem Massstab zur Erläuterung der geometrischen Verhältnisse und
- Figur 5: eine weitere Variante des Erfindungsgegenstandes in einer Draufsicht analog Figur 4.

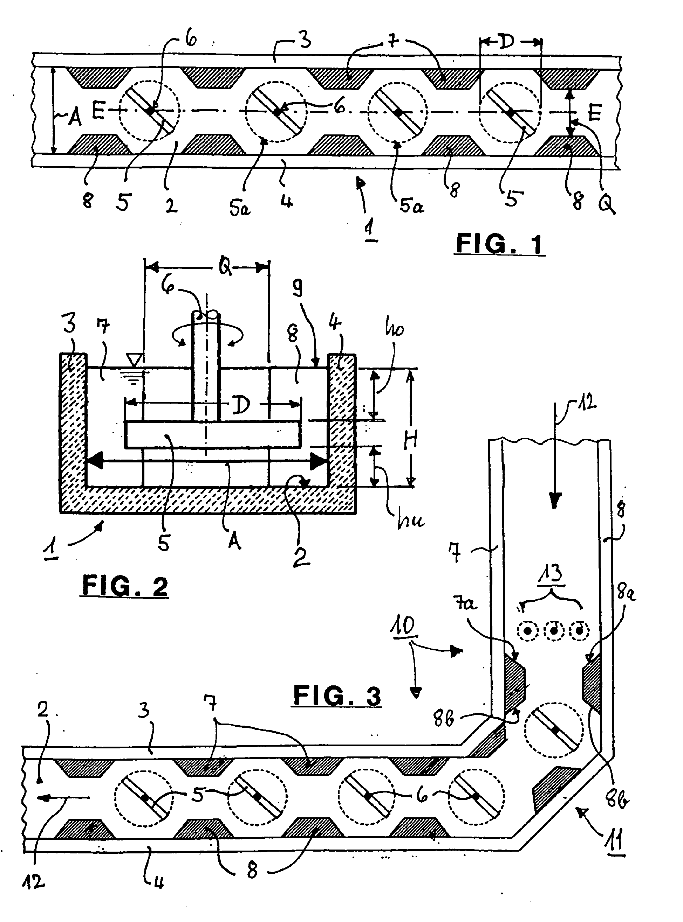

In Figur 1 ist ein Fliesskanal 1 mit einem ebenen Kanalboden 2, zwei senkrechten parallelen Seitenwänden 3 und 4 und vier Rührern 5 mit vertikalen Rührerwellen 6 dargestellt. Durch die gestrichelten Kreise sind die sogenannten Hüllflächen 5a dargestellt, die bei der Rotation der Rührer 5 von den am weitesten aussen liegenden Punkten der Rührerblätter durchlaufen werden. Der Durchmesser "D" dieser Kreise und damit der Rührerblätter beträgt zwischen 360 und 560 mm. Die lichte Kanalbreite wird durch den Abstand "A" definiert, der mindestens 400 mm beträgt und auch 1000 mm überschreiten kann und damit die Breite des Glasstromes vorgibt.

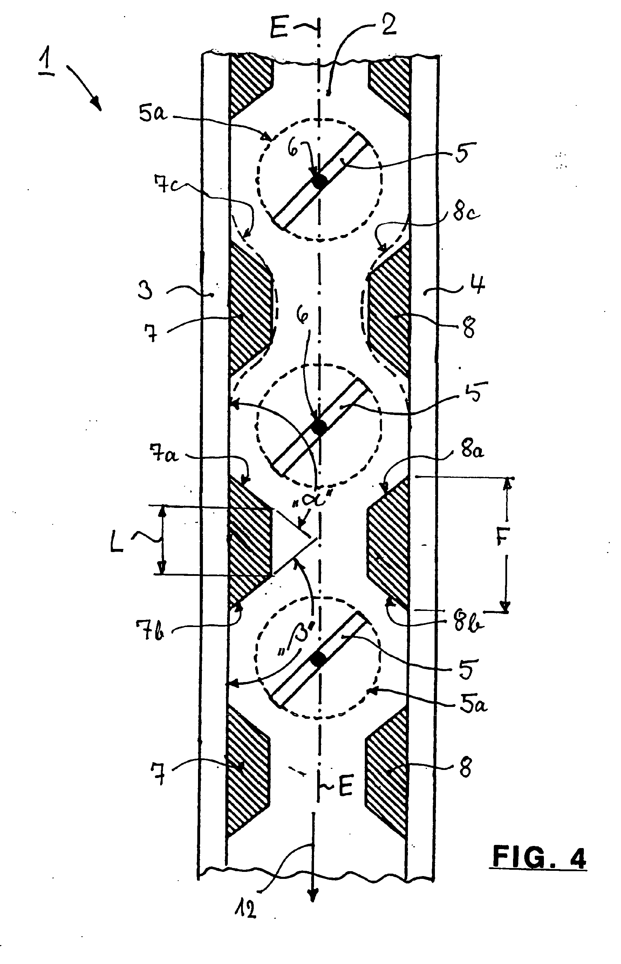

Der Fliesskanal 1 besitzt eine senkrechte Längsmittenebene E-E, in der die Achsen der Rührerwellen 6 liegen. Die Seitenwände 3 und 4 besitzen Vorsprünge 7 und 8, die einander paarweise und spiegelsymmetrisch zur Längsmittenebenen E-E gegenüber liegen und den Abstand "A" auf das Querschnittsmass "Q" verringern. Das Verhältnis von Q:A beträgt zwischen 0,5 und 0,9. Dadurch werden sogenannte Taschen gebildet, in denen die Rührer konzentrisch rotieren. Es ist ersichtlich, dass die Durchmesser der Hüllflächen 5a und die Vorsprünge 7 und 8 sich bei seitlicher Blickrichtung gemäss Figur 2 überschneiden. Bezüglich weiterer geometrischer Zusammenhänge wird auf die Figur 4 verwiesen.

Gemäss Figur 2 existiert ein Glasstand "H" zwischen dem Kanalboden 2 und dem Schmelzenspiegel 9, der zwischen 140 und 230 mm beträgt. Die Unterseite der Rührer 5 hat einen Abstand "hu" vom Kanalboden, und die Oberseite der Rührer hat einen Abstand "ho" vom Schmelzenspiegel 9. Vorzugsweise ist "hu" kleiner als "ho", damit die von den Rührern 5 geförderte Aufwärtsströmung auch die Schmelze im Bodenbereich des Fliesskanals 1 erfasst.

Bei den Rührern 5 handelt es sich vorzugsweise um sogenannte Flügelrührer. Die Rührer 5 können jedoch auch in mehreren Ebenen übereinander Flügelpaare aufweisen. Ferner kann es sich bei den Rührern 5 um Einfach-Blattrührer oder Rührer mit mehreren Rührerarmen handeln, die vertikal übereinander angeordnet sind. Die Rührerarme können im Querschnitt rund, abgeflacht und in einem Winkel zur Vertikalen stehen. Durch die Anordnung, Geometrie, Drehzahl und Drehrichtung der Rührer 5 lassen sich weitere Optimierungen erzielen. Die Rührer können beispielsweise gleichsinnig oder alternierend gegensinnig rotieren, und zwar auch dann, wenn dabei die vorteilhaften Aufwärtsströmungen erzeugt werden.

Der Fliesskanal 1 wird seitlich mit nicht dargestellten Brennern beheizt, die typischerweise mit einem Vorgemisch aus Brenngas und Luft, mit Sauerstoff angereicherter Luft oder Sauerstoff versorgt werden. Der Fliesskanal 1 kann zusätzlich aber auch elektrisch mittels nicht gezeigten Elektroden beheizt werden, die seitlich im Fliesskanal 1 in die Schmelze ragen.

Jeweils vor und nach den Rührern 5 befinden sich die Vorsprünge 7 und 8, die der Kontur der Rührerbewegung angepasst sind. Es hat sich gezeigt, dass die horizontalen Vorsprünge 7 und 8 Einschnürungen in der Strömung erzeugen, die zu einem deutlichen Vorteil in der Homogenität gegenüber einer einfachen Konfiguration von Rührerreihen in einem Fliesskanal mit konstanter Breite gemäss dem Abstand "A" führen.

Die Figur 3 zeigt unter Fortschreibung der bisherigen Bezugszeichen, dass eine Anordnung wie die nach Figur 1 auch in einem gebogenen Fliesskanal 10 zum Einsatz kommen kann. Der Ausdruck "gebogen" schliesst eine mindestens einfach abgewinkelte Biegung, eine zweifach abgewinkelte Biegung - wie gezeichnet - ein, aber auch eine kontinuierliche Biegung mit Krümmungsradien ein und muss auch nicht rechtwinklig sein.

Von Bedeutung ist hierbei, dass der Biegungsbereich 11 seitlich abgeflacht ausgebildet ist oder auch abgerundet sein kann, um speziell an dieser Stelle tote Ecken in der Strömung auszuschliessen. Auch hier ist ersichtlich, dass das Prinzip von Vorsprüngen 7 und 8 Taschen bildet, in denen die Rührer 5 angeordnet sind. Die Fliessrichtung ist durch den Pfeil 12 angegeben, und es ist ferner ersichtlich, dass der alternierenden Strecke von Rührern 5 und Vorsprüngen 7 und 8 eine Querreihe 13 von sogenannten Schraubenrührern vorgeschaltet ist. Vor dem Auslauf aus dem Fliesskanal 1 oder 10 kann gleichfalls eine Querreihe von 2 bis 6 Rührern angeordnet sein.

Die Figur 4 zeigt, wiederum unter Fortschreibung der bisherigen Bezugszeichen, dass die Vorsprünge 7 und 8 in der Waagrechten einen trapezförmigen Querschnitt haben. Bezogen auf die Fliessrichtung gemäss dem Pfeil 12, besitzen diese Vorsprünge Einströmseiten 7a und 8a sowie Abströmseiten 7b und 8b. Diese schliessen mit den Längsrichtungen der Seitenwände 3 und 4 Winkel "α" und "β" ein, die deutlich grösser sind als rechte Winkel, also beispielsweise grösser als 120°. Dadurch werden Taschen ohne tote Ecken gebildet, in denen sich andernfalls Teilvolumina der Schmelze zumindest vorübergehend festsetzen könnten. Die Verhältnisse lassen sich noch dadurch idealisieren, daß den Vorsprüngen 7 und 8 in Fliessrichtung wellenförmige Konturen gegeben werden, wie dies oben in Figur 4 durch die gestrichelten Linien 7c und 8c angedeutet ist. Die Basisflächen "F" dieser Vorsprünge liegen in den Ebenen der Seitenwände 3 und 4. Die Länge "L" der durch die Vorsprünge 7 und 8 gebildeten Einschnürungen, gemessen auf der Längsseite zur Mittenlängsebene E-E des Fliesskanals 1 oder 10, beträgt vorzugsweise zwischen 300 und 1000 mm.

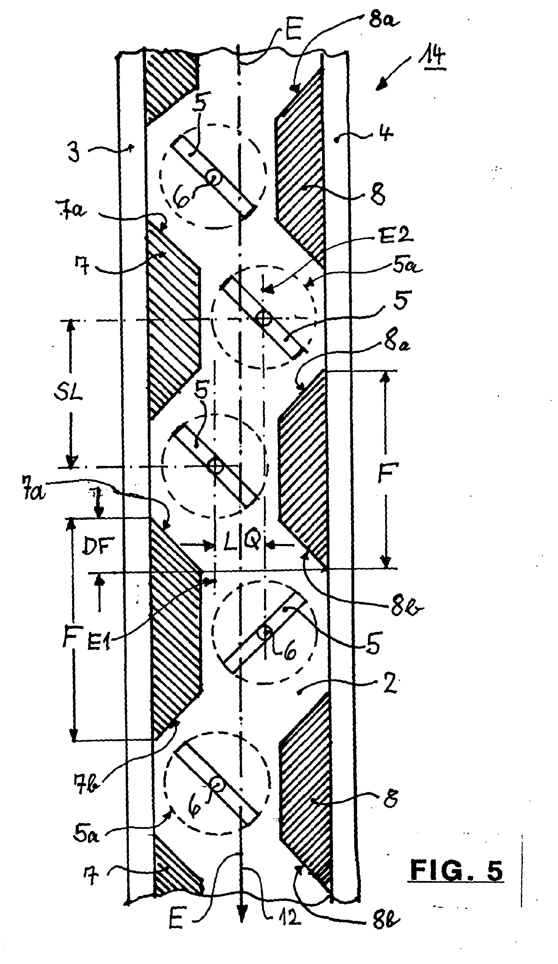

Die Figur 5 zeigt eine weitere Variante des Erfindungsgegenstandes in einer Draufsicht analog Figur 4. In dem Fliesskanal 14 sind die Vorsprünge 7 und 8 in Längsrichtung des Fliesskanals 14 versetzt zueinander angeordnet, wobei aber die Einströmseiten 7a und 8a und die Abströmseiten 7b und 8b wiederum einen trapezförmigen horizontalen Querschnitt umschreiben. Durch den axialen Versatz der Vorsprünge 7 und 8 sind die Rührerwellen 6 alternierend zur senkrechten Mittenlängsebene E-E versetzt angeordnet, so daß sich die Rührer 5 wiederum in einer Art "Taschen" drehen, in denen sich keine recht- oder spitzwinkligen Eckräume befinden. Die Längsabstände "SL" der Rührerwellen 6 - in Richtung der Mittenlängsebene E-E gesehen - sind dabei deutlich grösser als der Querabstand "LQ" zweier senkrechter Ebenen E1 und E2, in denen die Achsen der Rührerwellen 6 angeordnet sind. Dadurch ist der Grad des Mäandrierens deutlich reduziert, und die Einströmseiten 7a, 8a und die Abströmseiten 7b, 8b der Vorsprünge, die übrigen Trapezflächen und die dem Glas ausgesetzten Innenflächen der Seitenwände 3 und 4 umgeben die Hüllflächen 5a der Rührer 5 mit geringen Abständen. Zu erwähnen ist noch, dass sich die beiderseitigen Basisflächen "F" der Vorsprünge 7 und 8 - in Querrichtung gesehen - um das Mass "DF" überlappen.

Es bleibt noch festzuhalten, dass derartige Fliesskanäle 1, 10 und 14 üblicherweise zwischen einer Schmelzwanne mit einem Schmelz-, Läuter-und Abstehteil und ggf. auch einer Arbeitswanne einerseits und einem Entnahmeteil für Hohl- und Flachglas bzw. Walzglas andererseits angeordnet sind. Soweit es sich um die Zugabe von Farbstoffen handelt, die z.B. in Form einer Fritte zugegeben werden können, geschieht dies nach bekannten Prinzipien z.B. in einem Fliesskanal im Eingangsbereich des Glases, das aus der Schmelzanlage der Fertigung zugeführt wird.

Die Erfindung ist jedoch keineswegs auf Färbevorgänge beschränkt. Auch ist der Einsatz für Spezialglas vorgesehen, das nicht gefärbt wird, wie z.B. für die Herstellung von LCD- und/oder TFT-Glas, denn auch hierbei ist diese Art der Homogenisierung vorteilhaft, da es hier vorrangig auf eine gute Homogenität des Glases ankommt.

### Bezugszeichenliste:

- 1: Fliesskanal
- 2: Kanalboden
- 3: Seitenwand
- 4: Seitenwand
- 5: Rührer
- 5a: Hüllflächen
- 6: Rührerwellen
- 7: Vorsprünge
- 7a: Einströmseite
- 7b: Abströmseite
- 7c: Linie
- 8: Vorsprünge
- 8a: Einströmseite
- 8b: Abströmseite
- 8c: Linie
- 9: Schmelzenspiegel
- 10: Fliesskanal
- 11: Biegungsbereich
- 12: Pfeil
- 13: Querreihe
- 14: Fliesskanal

- "α": Winkel
- "β": Winkel
- A: Abstand
- D: Durchmesser
- DF: Mass der überlappungen von F
- E-E: vertikale Mittenlängsebene
- E1: Ebene
- E2: Ebene
- F: Basisfläche
- H: Glassstand
- ho: Abstand
- hu: Abstand
- L: Länge
- LQ: Querabstand
- Q: Querschnittsmass
- SL: Längsabstände

## Patentansprüche

1. Verfahren zum Konditionieren und Homogenisieren von in Fliesskanälen (1, 10, 14) mit einer vertikalen Mittenlängsebene (E-E) und mit Seitenwänden (3, 4) fliessenden Glasschmelzen unter der Einwirkung von in Fliessrichtung alternierenden Querschnittsänderungen und in Fliessrichtung angeordneten Rührern (5) mit vertikalen Rührerwellen (6), **dadurch gekennzeichnet, dass**
a) die Glasschmelze durch mindestens einen Fliesskanal (1, 10, 14) geleitet wird, in dem die Querschnittsänderungen auf beiden Seiten durch mehrere in Fliessrichtung aufeinander folgende Vorsprünge (7, 8) herbeigeführt werden, die auf die Mittenlängsebene (E-E) ausgerichtet sind und auf ihren Einströmseiten (7a, 8a) und ihren Abströmseiten (7b, 8b) Wandbereiche besitzen, die derart schräg zur Mittenlängsebene (E-E) verlaufen, dass in dem Fliesskanal (1, 10) keine recht-oder spitzwinkligen Ecken gebildet werden, und dass
b) die Rührer (5) zwischen in Fliessrichtung aufeinander folgenden Abströmseiten (7b, 8b) und Einströmseiten (7a, 7b) der Vorsprünge (7, 8) angeordnet werden.

2. Verfahren nach Anspruch 1, **dadurch gekennzeichnet, dass** die Rührer (5) in der Mittenlängeebene (E-E) in einer Reihenanordnung angeordnet sind, dass die Glasschmelze zwischen Paaren von Vorsprüngen (7, 8) hindurchgeführt wird, die in spiegelsymmetrischer Anordnung auf die Mittenlängsebene (E-E) ausgerichtet sind und dass die Rührer (5) - in Fliessrichtung gesehen - zwischen den Abströmseiten (7b, 8b) eines Paares von Vorsprüngen (7, 8) und den Einströmseiten (7a, 8a) des folgenden Paares von Vorsprüngen (7, 8) rotiert werden.

3. Verfahren nach Anspruch 1, **dadurch gekennzeichnet, dass** die Rührer (5) beiderseits der Mittenlängeebene (E-E) um einen Querabstand (LQ) versetzt alternierend angeordnet sind, dass die Glasschmelze zwischen jeweils einer Seitenwand (3, 4) und dem jeweils gegenüber liegenden Vorsprung (7, 8) hindurchgeführt wird und dass die Rührer (5) in den Zwischenräumen zwischen den Seitenwänden (3, 4) und den Vorsprüngen (7, 8) rotiert werden.

4. Verfahren nach Anspruch 1, **dadurch gekennzeichnet, dass** durch die Rührer (5) vom Kanalboden (2) ausgehende Aufwärtsströmungen erzeugt werden.

5. Verfahren nach Anspruch 1, **dadurch gekennzeichnet, dass** die Seitenbereiche des Fliesskanals (1, 10, 14) durch mindestens zwei Energiequellen aus der Gruppe Gasbrenner und Elektroden beheizt werden.

6. Verfahren nach Anspruch 5, **dadurch gekennzeichnet, dass** die Gasbrenner mit mindestens einem Oxidationsgas aus der Gruppe Luft, mit Sauerstoff angereicherter Luft und Sauerstoff versorgt werden.

7. Verfahren nach Anspruch 1, **dadurch gekennzeichnet, dass** der Glasstand (H) im Bereich der Rührer (5) zwischen 140 und 230 mm gewählt wird.

8. Vorrichtung zum Konditionieren und Homogenisieren von Glasschmelzen mit mindestens einem Fliesskanal (1, 10, 14) mit einer vertikalen Mittenlängsebene (E-E) und mit Seitenwänden (3, 4), zwischen denen, in Fliessrichtung gesehen, alternierende Querschnittsänderungen und in Fliessrichtung angeordnete Rührer (5) mit vertikalen Rührerwellen (6) angeordnet sind, **dadurch gekennzeichnet, dass**
a) die Querschnittsänderungen im Fliesskanal (1, 10, 14) auf beiden Seiten durch mehrere in Fliessrichtung aufeinander folgende Vorsprünge (7, 8) gebildet sind, die auf die Mittenlängsebene (E-E) ausgerichtet sind und auf ihren Einströmseiten (7a, 8a) und ihren Abströmseiten (7b, 8b) Wandbereiche besitzen, die derart schräg zur Mittenlängsachse (E-E) verlaufen, dass in dem Fliesskanal (1, 10, 14) keine recht- oder spitzwinkligen Ecken vorhanden sind, und dass
b) die Rührer (5) zwischen in Fliessrichtung aufeinander folgenden Abströmseiten (7b, 8b) und Einströmseiten (7a, 7b) der Vorsprünge (7, 8) angeordnet sind.

9. Vorrichtung nach Anspruch 8, **dadurch gekennzeichnet, dass** die Rührer (5) in der Mittenlängsebene (E-E) in einer Reihenanordnung angeordnet sind, dass die Vorsprünge (7, 8) paarweise in spiegelsymmetrischer Anordnung auf die Mittenlängsebene (E-E) ausgerichtet sind und dass die Rührer (5) - in Fliessrichtung gesehen - zwischen den Abströmseiten (7b, 8b) eines Paares von Vorsprüngen (7, 8) und den Einströmseiten (7a, 8a) des folgenden Paares von Vorsprüngen (7, 8) angeordnet sind.

10. Vorrichtung nach Anspruch 8, **dadurch gekennzeichnet, dass** die Rührer (5) beiderseits der Mittenlängsebene (E-E) alternierend um einen Querabstand (LQ) versetzt angeordnet sind, dass die Vorsprünge (7, 8) in Fliessrichtung alternierend versetzt auf die Mittenlängsebene (E-E) ausgerichtet sind und dass die Rührer (5) zwischen den Seitenwänden (3, 4) einerseits und den Vorsprüngen (7, 8) andererseits angeordnet sind.

11. Vorrichtung nach Anspruch 10, **dadurch gekennzeichnet, dass** die Rührer (5) in Fliessrichtung in einem Längsabstand (SL) angeordnet sind, der mindestens das Zweifache des Querabstandes (LQ) beträgt.

12. Vorrichtung nach Anspruch 8, **dadurch gekennzeichnet, dass** dem in Fliessrichtung gesehen ersten Rührer (5) mindestens ein weiterer Vorsprung (7, 8) vorgeschaltet ist.

13. Vorrichtung nach Anspruch 8, **dadurch gekennzeichnet, dass** dem in Fliessrichtung gesehen letzten Rührer (5) mindestens ein weiterer Vorsprung (7, 8) nachgeschaltet ist.

14. Vorrichtung nach Anspruch 8, **dadurch gekennzeichnet, dass** der freie Strömungsquerschnitt (Q) zwischen den gegenüberliegenden Vorsprüngen (7, 8) im Verhältnis zum Abstand (A) zwischen den Seitenwänden (3, 4) zwischen 0,5 und 0,9 gewählt ist.

15. Vorrichtung nach Anspruch 8, **dadurch gekennzeichnet, dass** die spiegelsymmetrischen Vorsprünge (7, 8) im Bereich des engsten Strömungsquerschnitts (Q) eben ausgebildet sind und bei einem Abstand (A) zwischen den Seitenwänden (3, 4) von 0,4 bis 1,0 m Längen (L) zwischen 0,3 und 1,0 m aufweisen.

16. Vorrichtung nach Anspruch 8, **dadurch gekennzeichnet, dass** die Vorsprünge (7, 8) zur kontinuierlichen Verengung und Erweiterung des Fliesskanals (1, 10) in der Draufsicht trapezförmig ausgebildet sind, wobei die Basisflächen (F) der Vorsprünge (7, 8) in den inneren Ebenen der Seitenwände (3, 4) liegen.

17. Vorrichtung nach den Ansprüchen 10 und 16, **dadurch gekennzeichnet, dass** sich die Basisflächen (F) der Vorsprünge (7, 8) in Bezug auf die gegenüberliegenden Seitenwände (3, 4) teilweise überlappen.

18. Vorrichtung nach Anspruch 8, **dadurch gekennzeichnet, dass** die Vorsprünge (7, 8) zur kontinuierlichen Verengung und Erweiterung des Fliesskanals (1, 10) in der Draufsicht wellenförmig ausgebildet sind und winkelfrei in die Seitenwände (3, 4) übergehen.

19. Vorrichtung nach Anspruch 8, **dadurch gekennzeichnet, dass** der Fliesskanal (10) gebogen ausgebildet ist und dass vor und hinter dem Biegungsbereich (11) jeweils mindestens ein Rührer (5) angeordnet ist.

20. Vorrichtung nach Anspruch 19, **dadurch gekennzeichnet, dass** der Biegungsbereich (11) mindestens einfach abgewinkelt ausgebildet ist.

21. Vorrichtung nach Anspruch 19, **dadurch gekennzeichnet, dass** der Biegungsbereich (11) kontinuierlich gekrümmt ausgebildet ist.

22. Vorrichtung nach Anspruch 8, **dadurch gekennzeichnet, dass** den Rührern (5) und Vorsprüngen (7, 8) auf der Eintrittsseite eine Querreihe (13) von Rührern vorgeschaltet ist.

23. Vorrichtung nach Anspruch 9, **dadurch gekennzeichnet, dass** zwischen den in Fliessrichtung aufeinander folgenden Paaren von Vorsprüngen(7, 8) Taschen gebildet sind, die der Rührerbewegung und Rührerkontur angepasst sind und in die die Rührer (5) hinein ragen.

24. Vorrichtung nach Anspruch 10, **dadurch gekennzeichnet, dass** auf jeder Seite des Fliesskanals (1, 10, 14) zwischen den in Fliessrichtung aufeinander folgenden Vorsprüngen (7, 8) Taschen gebildet sind, die der Rührerbewegung und Rührerkontur angepasst sind und in die die Rührer (5) hinein ragen.
